# EUROPÄISCHE PATENTANMELDUNG

(11) **EP 3 670 936 A1**
(43) Veröffentlichungstag der Anmeldung: **24.06.2020**
(21) Anmeldenummer: 18214537.5
(22) Anmeldetag: 20.12.2018
(51) Int. Cl.: F16B 19/14, F16B 15/06

(54) **BEFESTIGUNGSELEMENT**

(71) Anmelder: Hilti Aktiengesellschaft, 9494 Schaan (LI)
(72) Erfinder: Schulte Suedhoff, Eric, 6800 Feldkirch (AT); Haag, Stefan, 9473 Gams (CH); Beauvais, Simon, Shanghai, PRC-201108 (CN); Gueltekin, Furkan, 9470 Buchs SG (CH)
(74) Vertreter: Hilti Aktiengesellschaft Corporate Intellectual Property

(57) **Zusammenfassung**

Die Anmeldung betrifft ein Befestigungselement (10), wie Bolzen, Nagel oder Stift, umfassend einen Schaft (20), welcher eine Eintreibrichtung (30) definiert, wobei der Schaft ein in die Eintreibrichtung weisendes Vorderende (21) und ein gegen die Eintreibrichtung weisendes Hinterende (22) aufweist, wobei der Schaft an seinem Umfang einen zur Eintreibrichtung in einem spitzen Winkel geneigten Profilrücken (40) aufweist. Gemäss einem Aspekt weist der Profilrücken eine in die Befestigungsrichtung weisende Vorderflanke (41) und eine gegen die Befestigungsrichtung weisende Hinterflanke (42) auf, wobei die Vorderflanke (41) einen grösseren Flächeninhalt aufweist als die Hinterflanke (42). Gemäss einem weiteren Aspekt weist das Befestigungselement einen Spitzenbereich (70) auf, welcher einen balligen Abschnitt aufweist.

## Beschreibung

Die vorliegende Erfindung betrifft ein Befestigungselement, wie beispielsweise Bolzen, Nagel oder Stift.

Derartige Befestigungselemente, wie z.B. Nägel, Bolzen und dgl. aus Stahl, werden in der Befestigungstechnik zum Befestigen von Gegenständen an harten Aufnahmewerkstoffen, wie Beton, Metall oder Gestein, eingesetzt. Die Befestigungselemente weisen dazu einen Schaft insbesondere mit einer sich in Setzrichtung verjüngenden Spitze und einem am anderen Ende des Schaftes liegenden Kopf auf, welcher gegenüber dem Durchmesser des Schaftes vergrössert ist. Der Eintreibvorgang erfolgt mit hoher Geschwindigkeit schlagend oder eintreibend beispielsweise mittels brennkraftbetriebener Setzgeräte.

Es sind Befestigungselemente bekannt, bei denen der Schaft an seinem Umfang ein Profil mit mehreren Profilrücken und dazwischenliegenden Furchen aufweist. Weiterhin sind Gestaltungen bekannt, bei denen die Profilrücken zur Befestigungsrichtung geneigt sind.

Eine Aufgabe liegt darin, ein Befestigungselement mit hoher Befestigungskraft zur Verfügung zu stellen.

Ein Befestigungselement umfasst einen Schaft, welcher eine Eintreibrichtung definiert, wobei der Schaft ein in die Eintreibrichtung weisendes Vorderende und ein gegen die Eintreibrichtung weisendes Hinterende aufweist, wobei der Schaft an seinem Umfang einen bevorzugt zur Eintreibrichtung in einem spitzen Winkel geneigten Profilrücken aufweist, und wobei der Schaft eine senkrecht zur Eintreibrichtung orientierte Querschnittsfläche mit einem Flächeninhalt einen im Bereich des Profilrückens gemessenen Schaftdurchmesser aufweist.

Gemäss einem ersten Aspekt weist der Profilrücken eine in die Befestigungsrichtung weisende Vorderflanke und eine gegen die Befestigungsrichtung weisende Hinterflanke auf, wobei die Vorderflanke einen grösseren Flächeninhalt aufweist als die Hinterflanke. Dadurch wird diejenige Fläche des Profilrückens, welche während eines Eintreibvorgangs durch Reibung aufgeheizt wird und dadurch verstärkt zu einer Haltekraft des Befestigungselements in dem Untergrund beiträgt, auf Kosten von Flächen mit geringerem Beitrag zur Haltekraft vergrössert, so dass insgesamt die Befestigungskraft des Befestigungselements erhöht ist.

Gemäss einem weiteren Aspekt umfasst das Befestigungselement einen sich an das Vorderende des Schaftes anschliessenden Spitzenbereich mit einer Nagelspitze, wobei der Spitzenbereich eine in der Eintreibrichtung gemessene Spitzenlänge und eine senkrecht zur Eintreibrichtung orientierte Querschnittsfläche mit einem Flächeninhalt aufweist, welcher an einem Übergang von dem Spitzenbereich zum Schaft so gross ist wie der Flächeninhalt der Querschnittsfläche des Schaftes und sich von dem Schaft zur Nagelspitze verringert, und wobei der Spitzenbereich einen balligen Abschnitt umfasst. Bevorzugt besteht der Spitzenbereich aus dem balligen Abschnitt. Aufgrund der balligen Form des Spitzenbereichs steigt der Flächeninhalt der Querschnittsfläche des Spitzenbereichs ausgehend von der Nagelspitze schnell an, so dass zu Beginn eines Eintreibvorgangs viel Reibungswärme erzeugt wird. Dadurch kann eine Oberfläche des Profilrückens verstärkt zu einer Haltekraft des Befestigungselements in dem Untergrund beitragen, so dass die Befestigungskraft des Befestigungselements erhöht ist.

Eine vorteilhafte Ausführungsform ist dadurch gekennzeichnet, dass der Spitzenbereich eine Spitzenbereichsmitte aufweist, welche von dem Übergang von dem Spitzenbereich zum Schaft und von der Nagelspitze in der Eintreibrichtung gemessen gleich weit entfernt ist, und wobei der Flächeninhalt der Querschnittsfläche des Spitzenbereichs an der Nagelmitte mehr als 25% des Flächeninhalts der Querschnittsfläche des Schaftes beträgt. Bevorzugt beträgt der Flächeninhalt der Querschnittsfläche des Spitzenbereichs an der Nagelmitte mehr als 50%, besonders bevorzugt mehr als 70% oder mehr als 75% des Flächeninhalts der Querschnittsfläche des Schaftes.

Eine vorteilhafte Ausführungsform ist dadurch gekennzeichnet, dass der Schaft einen im Bereich des Profilrückens gemessenen Schaftdurchmesser aufweist, und wobei die Spitzenlänge das 1,1- bis 1,6-fache des Schaftdurchmessers beträgt.

Eine vorteilhafte Ausführungsform ist dadurch gekennzeichnet, dass ein Neigungswinkel des Profilrückens gegenüber der Eintreibrichtung weniger als 20° beträgt. Dadurch ist sichergestellt, dass ein Schlag auf das Befestigungselement in der Eintreibrichtung eine Drehung des Befestigungselements verursacht. Unter Umständen eignet sich der Profilrücken nicht als Gewinde, welches eine Drehung des Befestigungselements in einen Vortrieb umwandeln würde.

Eine vorteilhafte Ausführungsform ist dadurch gekennzeichnet, dass eine Querschnittsfläche des Schaftes einen Flächeninhalt aufweist, welcher sich entlang der Eintreibrichtung nicht wesentlich ändert.

Eine vorteilhafte Ausführungsform ist dadurch gekennzeichnet, dass das Befestigungselement einen sich an das Hinterende des Schaftes anschliessenden Kopf umfasst.

Eine vorteilhafte Ausführungsform ist dadurch gekennzeichnet, dass der Schaft zwei oder mindestens drei, bevorzugt mindestens vier Profilrücken aufweist. Besonders bevorzugt sind die Profilrücken gleichmässig am Umfang des Schaftes verteilt.

Eine vorteilhafte Ausführungsform ist dadurch gekennzeichnet, dass der Spitzenbereich eine Querschnittsfläche aufweist, deren Flächeninhalt sich von dem Schaft zur Nagelspitze stetig verringert. Bevorzugt setzt sich der Profilrücken vom Schaft aus in den Spitzenbereich hinein fort. Besonders bevorzugt setzt sich der Profilrücken im Wesentlichen bis zur Nagelspitze fort.

Weitere Vorteile und Massnahmen der Erfindung ergeben sich aus den Unteransprüchen, der nachfolgenden Beschreibung und den Zeichnungen. In den Zeichnungen ist die Erfindung in einem Ausführungsbeispiel dargestellt.

Es zeigen:
- Fig. 1: ein erfindungsgemässes Befestigungselement in Seitenansicht,
- Fig. 2: das Befestigungselement in Schrägansicht,
- Fig. 3: eine Walzbacke zur Herstellung des Befestigungselements,
- Fig. 4: verschiedene Ausführungsbeispiele einer Querschnittsfläche eines Befestigungselements und
- Fig. 5: einen Verlauf eines Flächeninhalts einer Querschnittsfläche eines Befestigungselements.

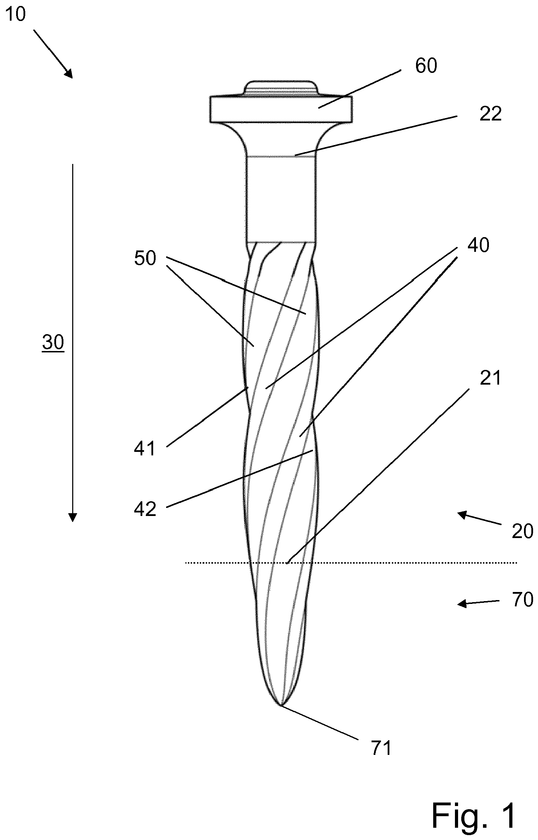

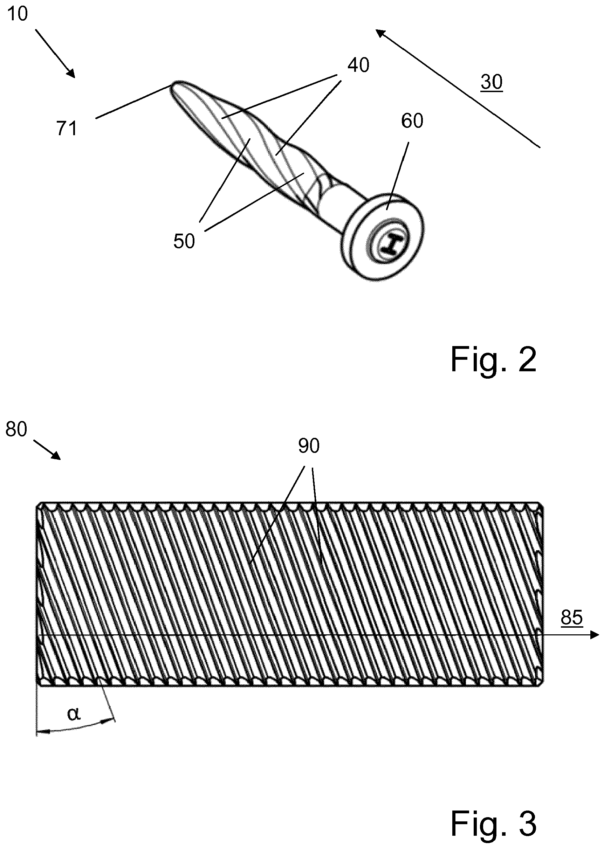

Die Fig. 1 und 2 zeigen ein Befestigungselement 10 in einer Seitenansicht. Das Befestigungselement 10 umfasst einen Schaft 20, welcher eine Eintreibrichtung 30 definiert und ein in die Eintreibrichtung 30 weisendes Vorderende 21 sowie ein gegen die Eintreibrichtung 30 weisendes Hinterende 22 aufweist. Der Schaft 20 weist eine senkrecht zur Eintreibrichtung 30 orientierte Querschnittsfläche und an seinem Umfang mehrere zur Eintreibrichtung in einem spitzen Winkel von 15° geneigte Profilrücken 40 auf. Jeweils zwischen zwei Profilrücken 40 bilden sich Profilzwischenbereiche 50 aus, welche im vorliegenden Beispiel als Furchen ausgebildet sind. An das Hinterende 22 des Schaftes 20 schliesst sich ein Kopf 60 an. An das Vorderende 21 des Schaftes 20 schliesst sich ein balliger Spitzenbereich 70 mit einer bevorzugt punktförmigen Nagelspitze 71 an. Die Profilrücken 40 weisen jeweils eine in die Befestigungsrichtung 30 weisende Vorderflanke 41 und eine gegen die Befestigungsrichtung 30 weisende Hinterflanke 42 auf und setzen sich vom Schaft 20 aus in den Spitzenbereich 70 hinein bis zur Nagelspitze 71 fort.

Fig. 3 zeigt eine Walzbacke 80, welche zur Herstellung des Befestigungselements verwendbar ist, indem ein nicht dargestellter Rohling mit einem Schaft zwischen der Walzbacke 80 und einer gleichgeformten Gegenbacke in einer Rollrichtung 85 gerollt wird. Die Walzbacke 80 weist eine Vielzahl von Nuten 90 auf, so dass während des Rollens ein Profil mit Profilrücken in einen Umfang des Schaftes gewalzt wird. Die Nuten 90 sind gegenüber einer Längsrichtung des Schaftes, welche senkrecht zur Rollrichtung 85 orientiert ist, um einen spitzen Neigungswinkel α geneigt, so dass auch die gewalzten Profilrücken gegenüber der Längsrichtung des Schaftes um den Winkel α geneigt sind.

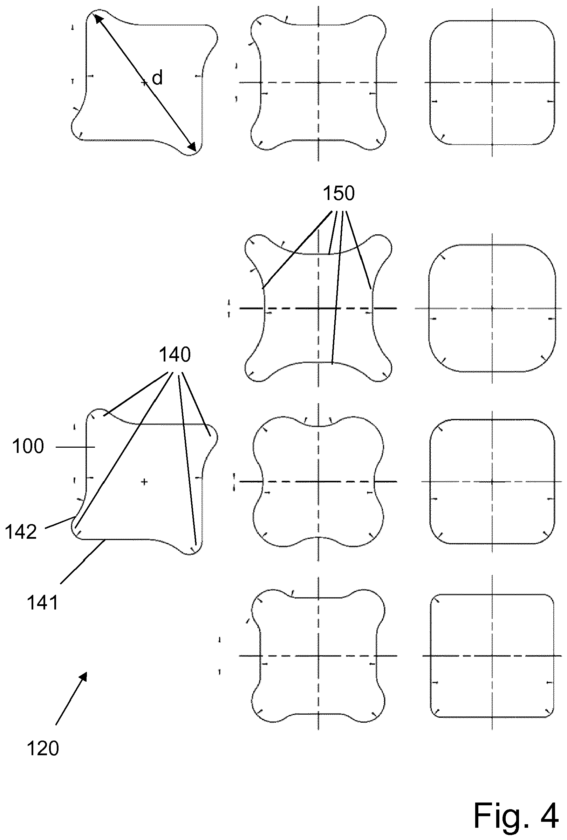

Fig. 4 zeigt jeweils eine senkrecht zur Eintreibrichtung orientierte Querschnittsfläche 100 eines Schaftes 120 eines Befestigungselements gemäss mehrerer verschiedener Ausführungsbeispiele. Der jeweilige Schaft 120 weist jeweils vier gleichmässig am Umfang des jeweiligen Schaftes 120 verteilte Profilrücken 140 und dazwischenliegende Profilzwischenbereiche 150 auf, welche bei den in Fig. 4 links und mittig dargestellten Ausführungsbeispielen als Furchen ausgebildet sind. Bei den in Fig. 4 rechts dargestellten Ausführungsbeispielen sind die Profilzwischenbereiche 150 eben ausgebildet, bei nicht dargestellten Ausführungsbeispielen sind die Profilzwischenbereiche konkav ausgebildet. Die Profilrücken zeichnen sich dadurch aus, dass sie gegenüber einer kreisförmigen Querschnittsform und gegenüber den Profilzwischenbereichen radial vorspringen. Der jeweilige Schaft 120 weist einen im Bereich der Profilrücken gemessenen Schaftdurchmesser d auf.

Aufgrund der Neigung der Profilrücken 140 gegenüber der Eintreibrichtung weist jeder Profilrücken 140 eine in die Befestigungsrichtung weisende Vorderflanke 141 und eine gegen die Befestigungsrichtung weisende Hinterflanke 142 auf, wobei die Vorderflanke 141 während eines Eintreibvorgangs durch Reibung stärker aufgeheizt wird als die Hinterflanke 142. Die Vorderflanke 141 weist dabei einen grösseren Flächeninhalt auf als die Hinterflanke 142, so dass insgesamt eine Befestigungskraft des Befestigungselements erhöht ist.

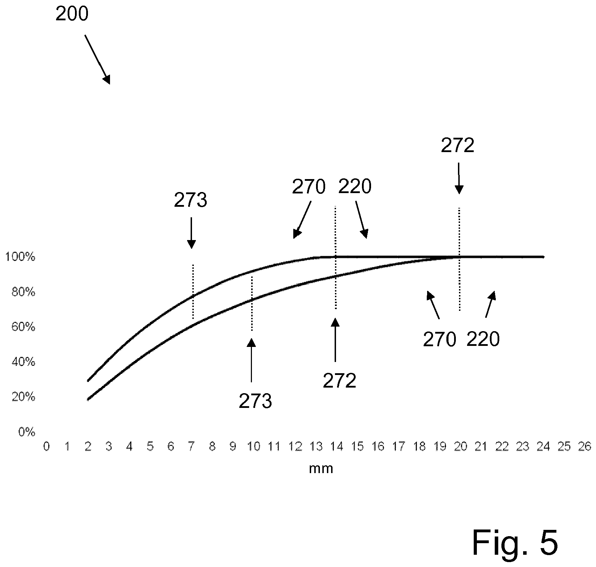

Fig. 5 zeigt in einem Diagramm 200 einen Verlauf eines Flächeninhalts einer Querschnittsfläche eines Befestigungselements in zwei Ausführungsbeispielen, aufgetragen als Prozentsatz eines Flächeninhalts im Bereich eines Schaftes 220 des Befestigungselements gegen einen Abstand zu einer Nagelspitze in Millimetern. Im Bereich des Schaftes des Befestigungselements ändert sich der Flächeninhalt entlang der Eintreibrichtung nicht wesentlich (100%). In einem Spitzenbereich 270 verringert sich der Flächeninhalt stetig, ausgehend von 100% an einem Übergang 272 von dem Spitzenbereich 270 zum Schaft 220, bis zu einer Nagelspitze (0 mm, 0%). Der Spitzenbereich 270 weist eine Spitzenbereichsmitte 273 auf, welche von dem Übergang 272 und von der Nagelspitze gleich weit entfernt ist. In der Spitzenbereichsmitte 273 beträgt der Flächeninhalt der Querschnittsfläche des Spitzenbereichs 270 im ersten Ausführungsbeispiel (untere Kurve) 72%, im zweiten Ausführungsbeispiel (obere Kurve) 78% des Flächeninhalts der Querschnittsfläche des Schaftes 220. Weiterhin beträgt eine Spitzenlänge des Spitzenbereichs von dem Übergang 272 bis zur Nagelspitze im ersten Ausführungsbeispiel (untere Kurve) das 1,5-fache, im zweiten Ausführungsbeispiel (obere Kurve) das 1,2-fache des Schaftdurchmessers.

Vorstehend wurde die Erfindung anhand mehrerer Ausführungsbeispiele eines Befestigungselements erläutert. Die beschriebenen Merkmale sind dabei von jedem Ausführungsbeispiel auf alle anderen Ausführungsbeispiele einzeln oder in Kombination übertragbar, soweit sie sich nicht widersprechen. Es wird darauf hingewiesen, dass das erfindungsgemässe Befestigungselement auch für andere Zwecke einsetzbar ist.

## Patentansprüche

1. Befestigungselement, umfassend einen Schaft, welcher eine Eintreibrichtung definiert, wobei der Schaft ein in die Eintreibrichtung weisendes Vorderende und ein gegen die Eintreibrichtung weisendes Hinterende aufweist, wobei der Schaft an seinem Umfang einen zur Eintreibrichtung in einem spitzen Winkel geneigten Profilrücken aufweist, wobei der Profilrücken eine in die Befestigungsrichtung weisende Vorderflanke und eine gegen die Befestigungsrichtung weisende Hinterflanke aufweist, und wobei die Vorderflanke einen grösseren Flächeninhalt aufweist als die Hinterflanke.

2. Befestigungselement nach Anspruch 1, wobei ein Neigungswinkel des Profilrückens gegenüber der Eintreibrichtung weniger als 20° beträgt.

3. Befestigungselement nach einem der vorhergehenden Ansprüche, wobei eine Querschnittsfläche des Schaftes einen Flächeninhalt aufweist, welcher sich entlang der Eintreibrichtung nicht wesentlich ändert.

4. Befestigungselement nach einem der vorhergehenden Ansprüche, weiterhin umfassend einen sich an das Hinterende des Schaftes anschliessenden Kopf.

5. Befestigungselement nach einem der vorhergehenden Ansprüche, wobei der Schaft zwei oder mindestens drei, insbesondere mindestens vier Profilrücken aufweist.

6. Befestigungselement nach Anspruch 5, wobei die Profilrücken gleichmässig am Umfang des Schaftes verteilt sind.

7. Befestigungselement nach einem der vorhergehenden Ansprüche, weiterhin umfassend einen sich an das Vorderende des Schaftes anschliessenden Spitzenbereich mit einer Nagelspitze, wobei der Spitzenbereich eine Querschnittsfläche aufweist, deren Flächeninhalt sich von dem Schaft zur Nagelspitze verringert.

8. Befestigungselement nach Anspruch 7, wobei sich der Profilrücken vom Schaft aus in den Spitzenbereich hinein fortsetzt.

9. Befestigungselement nach Anspruch 8, wobei sich der Profilrücken im Wesentlichen bis zur Nagelspitze fortsetzt.

10. Befestigungselement nach einem der Ansprüche 7 bis 9, wobei der Schaft einen im Bereich des Profilrückens gemessenen Schaftdurchmesser aufweist, und wobei der Spitzenbereich eine in der Eintreibrichtung gemessene Spitzenlänge aufweist, welche das 1,1- bis 1,6-fache des Schaftdurchmessers beträgt.

11. Befestigungselement nach einem der Ansprüche 7 bis 10, wobei der Schaft eine senkrecht zur Eintreibrichtung orientierte Querschnittsfläche mit einem Flächeninhalt aufweist, welcher sich in der Eintreibrichtung nicht wesentlich ändert, wobei der Spitzenbereich eine in der Eintreibrichtung gemessene Spitzenlänge und eine senkrecht zur Eintreibrichtung orientierte Querschnittsfläche mit einem Flächeninhalt aufweist, welcher an einem Übergang von dem Spitzenbereich zum Schaft so gross ist wie der Flächeninhalt der Querschnittsfläche des Schaftes und sich von dem Schaft zur Nagelspitze verringert, insbesondere stetig verringert.

12. Befestigungselement nach Anspruch 11, wobei der Spitzenbereich einen balligen Abschnitt umfasst, insbesondere aus dem balligen Abschnitt besteht.

13. Befestigungselement nach einem der Ansprüche 11 und 12, wobei der Spitzenbereich eine Spitzenbereichsmitte aufweist, welche von dem Übergang von dem Spitzenbereich zum Schaft und von der Nagelspitze in der Eintreibrichtung gemessen gleich weit entfernt ist, und wobei der Flächeninhalt der Querschnittsfläche des Spitzenbereichs an der Nagelmitte mehr als 25% des Flächeninhalts der Querschnittsfläche des Schaftes beträgt.

14. Befestigungselement nach Anspruch 13, wobei der Flächeninhalt der Querschnittsfläche des Spitzenbereichs an der Nagelmitte mehr als 50% des Flächeninhalts der Querschnittsfläche des Schaftes beträgt.

15. Befestigungselement nach Anspruch 14, wobei der Flächeninhalt der Querschnittsfläche des Spitzenbereichs an der Nagelmitte mehr als 70%, insbesondere mehr als 75%, des Flächeninhalts der Querschnittsfläche des Schaftes beträgt.
